Europäisches Patentamt

**European Patent Office**

Office européen des brevets

(19)

(11) Veröffentlichungsnummer: **0 125 327**

**A1**

(12) **EUROPÄISCHE PATENTANMELDUNG**

(21) Anmeldenummer: **83104728.7**

(22) Anmeldetag: **13.05.83**

(51) Int. Cl.³: **G 05 D 9/12**
**A 01 K 63/04**

(43) Veröffentlichungstag der Anmeldung:
**21.11.84 Patentblatt 84/47**

(84) Benannte Vertragsstaaten:
**AT BE CH DE FR GB IT LI LU NL SE**

(71) Anmelder: **Schmidt, Wolfgang**
**Hochuferstrasse 5**
**D-6800 Mannheim 1(DE)**

(72) Erfinder: **Schmidt, Wolfgang**
**Hochuferstrasse 5**
**D-6800 Mannheim 1(DE)**

(54) **Nach dem Näherungsprinzip, elektronisch arbeitendes Gerät zur selbstständigen Überwachung und Regulierung des Soll-Wasserstandes in Aquarien.**

(57) Dieses Gerät, bestehend aus einem Auswert- und Steuerteil in Verbindung mit einem Abtastteil und einer Flüssigkeitspumpe, erfüllt zwei für den Aquarianer sehr wichtige Funktionen. Es überwacht den Wasserstand in Aquarien und füllt verdunstetes Wasser in der richtigen Menge selbständig wieder nach.

Ein unkontrolliertes Absinken des gewünschten oder erforderlichen Soll-Wasserstandes in Aquarien, bedingt durch Verdunstung des Wassers, kann sich folgenschwer auswirken. Funktionslosigkeit oder Beschädigung wertvoller Zusatzgeräte sowie Beeinträchtigung des Wohlbefindens empfindlich reagierender Pfleglinge in Meerwasseraquarien oder gar deren Tod können die Folge sein.

Es ist daher unbedingt erforderlich, den Soll-Wasserstand in Aquarien zu überwachen und zu korrigieren.

Bisher wird verdunstetes Wasser von Aquarianern oder deren Beauftragten manuell nachgefüllt.

Durch den Einsatz des erfundenen Gerätes wird der Aquarianer spürbar entlastet. Er kann für längere Zeit abwesend sein, z. B. im Urlaub und sein Aquarium ruhigen Gewissens unbeaufsichtigt lassen.

Figur 1

Figur 3

Croydon Printing Company Ltd

Nach dem Näherungsprinzip elektronisch arbeitendes
Gerät zur selbständigen Überwachung und Regulierung
des Soll-Wasserstandes in Aquarien

Die Erfindung bezieht sich auf ein nach dem Näherungsprinzip elektronisch arbeitendes Gerät zur selbständigen Überwachung und Regulierung des Soll-Wasserstandes in Aquarien; dabei ist ein Auswert- und Steuerteil mit einem Abtastteil und einer Flüssigkeitspumpe verbunden.

Gesprächen mit Zoofachhändlern und Hobbyaquarianern über den einschlägigen Stand der Technik war zu entnehmen, daß ein Gerät, wie es in dieser Beschreibung beschrieben wird, dort noch nicht bekannt war.

Noch immer wird verdunstetes Wasser von Aquarianern manuell nachgefüllt. Daher ist es erforderlich, daß der Aquarianer oder eine Person seines Vertrauens anwesend sein muß, um die Aufgabe des Nachfüllens von verdunstetem Wasser zu übernehmen.

Hier nun wird durch die Erfindung Abhilfe geschaffen. Die Erfindung, wie sie nachfolgend und in den Ansprüchen gekennzeichnet ist, erfüllt zwei für den Aquarianer sehr wichtige Funktionen. Sie überwacht den gewünschten oder erforderlichen Soll-Wasserstand in Aquarien und füllt verdunstetes Wasser in der richtigen Menge selbständig nach.

Die Erfindung löst die Aufgaben wie folgt:
Der Abtastteil, ein kapazitiver Näherungsschalter, tastet den jeweiligen Stand der Wasseroberfläche ab. Er arbeitet berührungslos und reagiert allein auf die Entfernung und Annäherung der Wasseroberfläche.

Der Auswert- und Steuerteil wertet die vom Abtastteil ständig übermittelten Impulse aus und schaltet bei Bedarf eine Flüssigkeitspumpe ein, die verdunstetes Wasser in genau dosierter Menge wieder nachfüllt.

Zwischen dem berührungslos arbeitenden Abtastteil und dem Element Wasser besteht kein direkter Kontakt. Somit ist die Bildung von Kalkrückständen und Salzkrusten an seiner Unterseite ausgeschlossen. Störungsfreie Dauerfunktion und Wartungsfreiheit sind garantiert. Um bei starker Wasseroberflächenbewegung, verursacht z. B. durch Strömungspumpen, Fehlschaltungen zu vermeiden, kann der Abtastteil in einer in der Höhe verstellbaren Halterung, in der die Wasseroberfläche absolut ruhig bleibt, am Aquariumrand oder Aquariumsteg befestigt werden. Der Wasserstand in der Halterung steigt und fällt mit dem im Aquarium.

Die durch die Erfindung erreichten Vorteile sind im wesentlichen darin zu sehen, daß der Aquarianer endlich einmal für längere Zeit sein Aquarium unbeaufsichtigt lassen kann, z. B. im Urlaub. Er muß sich keine Gedanken darüber machen, ob und wie weit der Wasserstand in seinem Aquarium durch Verdunstung des Wassers abgesunken ist, ob dadurch Strömungspumpen trockenlaufen, Innenfilter Luft ansaugen, in Meerwasseraquarien Eiweißabschäumer funktionslos werden oder der Salzgehalt auf ein für die Pfleglinge unerträgliches Maß ansteigt.
Eine große Sorge soll dem Aquarianer mit dieser Erfindung künftig abgenommen werden.

Im folgenden wird die Erfindung anhand lediglich einer Ausführungsmöglichkeit darstellenden Zeichnung näher erläutert. Es zeigt in perspektivischer Darstellung:

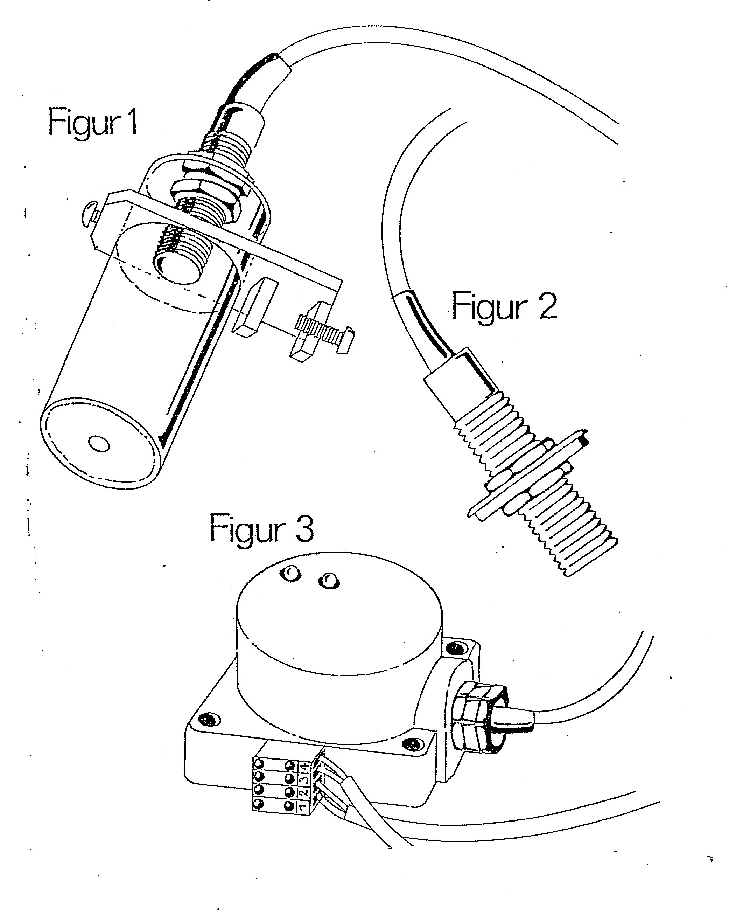

Figur 1 den Abtastteil geschützt in einer in der Höhe verstellbaren Halterung zur Befestigung am Aquariumrand,

- 3 -

0125327

Figur 2 nur den Abtastteil mit Außengewinde und zwei Muttern, hier befestigt am abnehmbaren Deckel der Halterung, und

Figur 3 den Auswert- und Steuerteil mit Zuleitung für Netzanschluß, Anschlußklemmen für Abtastteil und Flüssigkeitspumpe sowie Leuchtdioden zur Anzeige des jeweiligen Betriebszustandes.

Patentansprüche

1. Nach dem Näherungsprinzip elektronisch arbeitendes Gerät zur selbständigen Überwachung und Regulierung des Soll-Wasserstandes in Aquarien
   – und anderen Behältnissen –
   bestehend aus einem Auswert- und Steuerteil in Verbindung mit einem Abtastteil und einer Flüssigkeitspumpe.

2. Auswert- und Steuerteil nach Anspruch 1, zum Betrieb nur mit Netzstrom.

3. Auswert- und Steuerteil nach Anspruch 1, zum Betrieb nur mit Batteriestrom.

4. Auswert- und Steuerteil nach Anspruch 1, zum Betrieb mit Netz- und Batteriestrom, wahlweise umschaltbar.

5. Abtastteil nach Anspruch 1, dadurch gekennzeichnet, daß dieser ein kapazitiver Näherungsschalter ist.

Figur 1

Figur 2

Figur 3

# EUROPÄISCHER RECHERCHENBERICHT

**0125327**
Nummer der Anmeldung

EP 83 10 4728

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-3 127 268 (K. DREHER) * Seite 5, Zeile 30 - Seite 6, Zeile 35; Figur * | 1,2,5 | G 05 D 9/12 A 01 K 63/04 |
| Y | BBC-NACHRICHTEN, Band 59, Nr. 8/9, 1977, Seiten 351-357, Mannheim, DE. B. LAZENBY: "Neues Programm für Füllstands-Messgeräte und Füllstands-Regelgeräte" * Seite 352, mittlere Spalte, Zeile 14 - Seite 355, mittlere Spalte, Zeile 11; Figuren 3-10 * | 1,2,5 | |
| A | CHEMICAL ENGINEERING, Band 74, Nr. 21, 9. Oktober 1967, Seite 138, New York, USA "Aloof level controller cannot be fouled" * Insgesamt * | 1,2,5 | **RECHERCHIERTE SACHGEBIETE (Int. Cl. 3)** |
| A | US-A-3 757 317 (A. KAHN et al.) * Spalte 1, Zeile 65 - Spalte 3, Zeile 58; Figuren 1,2 * | 1,3 | G 05 D 9/00 A 01 K 63/00 |
| A | TECHNICA, Nr. 19, 1980, Seite 1580, Basel, CH. "Niveauüberwachung - einfacher denn je" * Insgesamt * | 1,4 | |

--- -/-

Der vorliegende Recherchenbericht wurde für alle Patentansprüche erstellt.

| Recherchenort DEN HAAG | Abschlußdatum der Recherche 09-01-1984 | Prüfer POINT A.G.F. |
|---|---|---|

**Europäisches Patentamt**

**EUROPÄISCHER RECHERCHENBERICHT**

**0125327**

Nummer der Anmeldung

EP 83 10 4728

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-A-2 853 981 (FRIEDRICH GROHE ARMATURENFABRIK) <br> * Seite 5, Zeile 8 - Seite 6, Zeile 6; Figuren 1-3 * | 1 | |
| A | CH-A- 535 534 (W. SCHIEMANN) | | |

RECHERCHIERTE SACHGEBIETE (Int. Cl. 3)

Der vorliegende Recherchenbericht wurde für alle Patentansprüche erstellt.

| Recherchenort <br> DEN HAAG | Abschlußdatum der Recherche <br> 09-01-1984 | Prüfer <br> POINT A.G.F. |
|---|---|---|